## Europäisches Patentamt

## European Patent Office

## Office européen des brevets

(19)

(11) **EP 0 835 428 B1**

(12) **EUROPÄISCHE PATENTSCHRIFT**

(45) Veröffentlichungstag und Bekanntmachung des Hinweises auf die Patenterteilung:
**13.02.2002 Patentblatt 2002/07**

(21) Anmeldenummer: **96921870.0**

(22) Anmeldetag: **29.06.1996**

(51) Int Cl.⁷: $G01F\ 11/08$

(86) Internationale Anmeldenummer:
**PCT/DE96/01161**

(87) Internationale Veröffentlichungsnummer:
**WO 97/01744 (16.01.1997 Gazette 1997/04)**

(54) **VERFAHREN UND VORRICHTUNG ZUR VERSCHLEISS- UND LECKAGE KONTROLLIERTEN VOLUMETRISCHEN DOSIERUNG EINER FLIESSFÄHIGEN KOMPONENTE**

PROCESS AND DEVICE FOR THE WEAR- AND LEAKAGE-MONITORED VOLUMETRIC DOSING OF A FREE-FLOWING COMPONENT

PROCEDE ET DISPOSITIF DE DOSAGE VOLUMETRIQUE D'UN CONSTITUANT COULANT, CONTROLE EN TERMES D'USURE ET DE FUITES

(84) Benannte Vertragsstaaten:
**CH DE ES FR GB IT LI**

(30) Priorität: **29.06.1995 DE 19523370**

(43) Veröffentlichungstag der Anmeldung:
**15.04.1998 Patentblatt 1998/16**

(73) Patentinhaber: **Rollfing, Petra**
**52062 Aachen (DE)**

(72) Erfinder: **MEINZ, Hans, Willi**
**52062 Aachen (DE)**

(74) Vertreter: **König, Werner, Dipl.-Ing. et al**
**Patentanwälte König & Kollegen Kackertstrasse 10**
**52072 Aachen (DE)**

(56) Entgegenhaltungen:
**EP-A- 0 228 628     EP-A- 0 562 398**
**DE-A- 4 113 511     DE-A- 4 118 502**

EP 0 835 428 B1

## Beschreibung

Die Erfindung betrifft ein Verfahren zur verschleiß- und leckage-kontrollierten volumetrischen Dosierung einer fließfähigen Komponente, insbesondere einer korrosiven undloder abrasiven Reaktionskomponente. Femer betrifft die Erfindung eine geeignete Vorrichtung zur Durchführung dieses Verfahrens.

Aus der Patentanmeldung EP-A1-0 0562 398 ist eine mit wenigstens einem Verdrängerkolben und mit jeweils einem hydraulisch betätigten Ein- und Auslaßventil ausgestattete Dickstoff-Kolbenpumpe bekannt, die von wenigstens einem hydraulischen Linearmotor angetrieben wird und die eine Überwachungseinrichtung besitzt, die das Dickstoffvolumen bestimmt, das während eines Förderhubes gepumpt wird. Die Überwachungseinrichtung mißt zu diesem Zweck die Zeit vom Beginn des Förderhubes bis zum Öffnen des Auslaßventils, wobei das Auslaßventil dann öffnet, wenn der Druck im Förderzylinder den Auslaßdruck erreicht und wobei ein Rechner vorgesehen ist, der das geförderte Dickstoff-Volumen aus den Zeitsignalen Förderhubanfang, Öffnen des Auslaßventils und Förderhubende errechnet.

Diese bekannte Vorrichtung mißt das geförderte Dickstoffvolumen physikalisch nicht korrekt, weil der mit der bekannten Vorrichtung geförderte Dickstoff (z.B. Klärschlamm) nicht eine homogene Flüssigkeit, sondern ein Festkörper-Flüssigkeit-Gas-Gemisch darstellt, wobei die jeweiligen Gemischanteile in der Regel weder volumetrisch noch gravimetrisch bekannt sind. Insbesondere weisen Klärschlämme durch die heute üblichen biologischen Oxidationsverfahren eine große Luft- oder Sauerstoffbeladung auf. Beim sogenannten Bakterienschlamm wandeln Bakterien Nitrate in Stickstoff um. In beiden Fällen wird die Kompressibilität des Dickstoffvolumens durch mikrofein- und/oder grobverteilte ungelöste Luft- bzw. Gase erhöht. Die Kompressibilität solcher Festkörper-Flüssigkeit-Gas-Gemische ist daher in Abhängigkeit von den ungelösten Luft- bzw. Gasanteilen erheblich. Gelöste Luft- bzw. Gase wirken sich dagegen nur. unwesentlich auf die Kompressibilität aus und brauchen deshalb in der Regel nicht berücksichtigt zu werden. Um eine exakte Volumenbestimmung des im Dickstoffvolumen vorhandenen gasfreien Festkörper-Flüssigkeitsanteils durchführen zu können, muß also zunächst eine exakte quantitative Bestimmung der Luft- bzw. Gasbeladung des im Förderzylinder eingeschlossenen Volumens erfolgen, wobei der physikalische Zusammenhang zwischen Druck und Gasvolumen bei den in der Flüssigkeit ungelösten Gasen durch die bekännte isotherme Kompressibilität (das ist die bei konstanter Temperatur gemessene Kompressibilität) und den entsprechenden bekannten Zustandsgleichungen für ideale Gase bzw. reale Gase beschrieben wird. Die Kompressibilität des gasfreien Flüssigkeitsanteils sowie die Kompressibilität und Größe des Festkörperanteils müssen dazu als stoffspezifische Konstanten bekannt sein. Nur so ist eine exakte quantitative Bestimmung der einzelnen im Förderzylinder eingeschlossenen festen, flüssigen und gasförmigen Dickstoffanteile auf mathematisch-physikalisch bekannte Art und Weise möglich.

Sollten die notwendigen stoffspezifischen Konstanten nicht bekannt sein, was bei den oben genannten Klärschlämmen in der Regel der Fall ist, so kann für die quantitative Bestimmung des Gasvolumens und des gasfreien Festkörper-Flüssigkeit-Volumens das letztere als inkompressibel angenommen werden, was für die meisten Anwendungen zu einer hinreichend genauen Bestimmung von Gasvolumen und Festkörper-Flüssigkeit-Volumen führt.

In den verschiedensten Gebieten der Technik ist es immer wieder erforderlich, ein fließfähiges Medium bzw. mehrere fließfähige Medien mittels Pumpen unter Druck volumetrisch hochgenau zu dosieren. Sowohl für die bekannten Hydraulikflüssigkeiten als auch für viele andere homogene Fluide kann dies zufriedenstellend mit bekannten Vorrichtungen gelöst werden.

Schwierigkeiten treten aber immer dann auf, wenn das zu dosierende Medium schwierig zu handhaben ist, weil z.B. das fließfähige Medium aus einem oder mehreren abrasiven Feststoffen, z.B. Pigmenten, zusammengesetzt ist, das Medium außerdem zum Auskristallisieren oder Verkleben neigt, so daß die verwendeten Dosierpumpen durch Verschleiß bzw. Leckagen bereits nach kurzer Zeit undefinierte Dosierfehler aufweisen. Um mit solchen Dosierpumpen über eine längere Zeit reproduzierbar genau dosieren zu können, sind in der Regel aufwendige Durchflußüberwachungen notwendig, die ihrerseits wiederum überwacht werden müssen, weil sie ebenso wie die Dosierpumpen verschießbehaftet sind.

Ein weiteres Problem üblicher Dosierpumpen besteht darin, daß sie grundsätzlich nur volumetrisch dosieren können. Über die in dem Pumpenraum angesaugte Masse kann üblicherweise keine Aussage gemacht werden. Da viele Flüssigkeiten eine beträchtliche Gasbeladung aufweisen, sind·Fehler bei der volumetrischen Dosierung vorprogrammiert. Es werden zu diesem Zwecke zwar gelegentlich den Dosierpumpen Massedurchflußmeßeinrichtungen nachgeschaltet, doch sind die Zeitkonstanten derartiger Meßeinrichtungen für viele Anwendungen zu groß. Außerdem verhindert der sehr hohe Preis in den meisten Fällen den Einsatz dieser Meßeinrichtungen.

Die Aufgabe der vorliegenden Erfindung besteht nun darin, ein Verfahren zur verschleiß- und leckagekontrollierten volumetrischen Dosierung einer fließfähigen Komponente, insbesondere einer korrosiven und/oder abrasiven Reaktionskomponente, anzugeben sowie eine zur. Durchführung dieses Verfahrens besonders geeignete Vorrichtung zu schaffen, mit dem bzw. der es möglich ist, auch schwierig zu fördernde Medien verschleiß-, leckage- und massekontrolliert volumefrisch zu dosieren. Dabei sollen Verfahren und Vorrichtung selbstüberwachend störungs- und wartungsfrei über lange Zeit hochgenau und reproduzierbar arbeiten und einschleichend auftretende Undichtigkeiten und damit Dosierfehler quantitativ erfassen und dokumentieren. Auch soll die im Pumpenraum angesaugte Masse bei jedem Pumpenzyklus kontrolliert werden, so daß gravimetrische Dosierfehler, z.B. aufgrund unterschiedlicher Gasbeladungen, ausgeschlossen sind.

Diese Aufgabe wird erfindungsgemäß bei einem Verfahren der eingangs erwähnten Art dadurch gelöst, daß'die Komponente angesaugt, anschließend vorkomprimiert und dann unter Druck dosiert wird,

daß die Komponente am Ende der Vorkompression auf einem bestimmten Druck gehalten wird und daß die bei der Vorkompression bewirkte Volumenänderung δV sowie die Druckänderung δp und damit die stoffspezifische Kompressibilität $\chi = -\frac{1}{V} \cdot \frac{\delta V}{\delta p}$ der Komponente vor jedem Dosiervorgang gemessen, gespeichert und mit einem entsprechenden gespeicherten Referenzwert verglichen wird.

Dabei kann erfindungsgemäß so verfahren werden, daß der Druck am Ende der Vorkompression immer nahezu gleich dem bei einem vorhergegangenen und/oder bei einem gleichzeitig ablaufenden Dosiervorgang "erlernten" Dosierdruck gehalten wird. Im Idealfall wird der Vorkompressionsdruck bis auf den zu erwartenden Dosierdruck angehoben, damit die Dosierbedingungen von Anfang bis Ende des Dosiervorganges konstant bleiben. Dieses Verfahren ist insbesondere bei der Mehrkomponentendosierung zur Herstellung von Reaktionskunststoffen von besonderer Bedeutung, da durch die dem gewählten Volumenstrom angepaßte Vorkompression ein Vor- oder Nacheilen einer oder mehrerer Komponenten beim Öffnen der entsprechenden Absperrvorrichtungen in die Mischkammer verhindert wird. Ansonsten wären unvermischte Masseteile und dadurch bedingt nicht ausreagierte Stellen im Formteil die Folgen. Ebenfalls werden durch die angepaßte Vorkompression Druckspitzen und Druckeinbrüche beim Öffnen der Mischkammer wirkungsvoll verhindert, die ebenfalls zu unkontrollierten Dosierfehlem führen.

Um eine Überwachung der angesaugten Masse durchführen zu können, wird bei jeder Vorkompression die stoffspezifische Kompressibilität gemessen und abgespeichert, so daß bei gleichen Dosierparametem (Volumenstrom, Druck, Temperatur, Kompressibilität der Komponente) ein Vergleich der gemessenen Kompressibilität der Komponente mit einem entsprechenden gespeicherten Referenzwert durchgeführt werden kann. Stimmt die gemessene Kompressibilität innerhalb vorgegebener Fehlergrenzen mit dem abgespeicherten Referenzwert überein, so wird der Dosiervorgang freigegeben. Bei Überschreiten der Fehlergrenzen wird eine Fehlermeldung ausgegeben und der Dosiervorgang nicht eingeleitet. Eine Fehlermeldung kann folgende,Ursachen haben:

1. Die im Pumpenraum angesaugte Masse entspricht nicht der Rezeptur. (Die Komponenten könnten vertauscht sein.)

2. Die im Pumpenraum angesaugte Masse ist mit einer unzulässigen Luft- oder Gasmenge beladen. (Rührwerk schlägt Luft ein.)

3. Die im Pumpenraum angesaugte Masse ist mit einer unzulässigen Menge an Füllstoffen angereichert (falsche Rezeptur).

4. Die Pumpe hat Luft bzw. Gas angesaugt (Kompönentenmangel).

5. In der Anlage sind undichte Verschraubungen, Ventile, Dichtungen, usw. vorhanden (Komponentenverluste).

Die Messung der Kompressibilität gibt sowohl Aufschluß über die im Pumpenraum angesaugte Masse als auch über die Dichtigkeit sämtlicher verschleiß- und leckagegefährdeter Anlagenteile der Dosiervorrichtung. Damit ist eine verschleißfreie Überwachung des Massenstromes möglich, die den Vorteil hat, daß sie in den Ruhezeiten der Pumpen, also immer vor dem eigentlichen Dosiervorgang, durchgeführt werden kann. Dies erfolgt in der Art und Weise, daß während der Ruhezeiten der jeweiligen Dosierpumpe die Kompressibilität in dem jeweiligen Pumpenraum gemessen und ausgewertet wird. Wenn dieses Meßergebnis vom gespeicherten Wert innerhalb der zulässigen Fehlergrenzen nicht abweicht, so ist bei konstantem Volumenstrom auch eine Konstanz des Massenstromes gegeben. Mögliche Abweichungsfehler vom "erlernten" Wert können nur in Verbindung mit den nachfolgend beschriebenen "Dichtigkeitsprüfungen" eine eindeutige Aussage über die angesaugte Masse der Komponente im Pumpenraum machen.

Gemäß einem weiteren Vorschlag der Erfindung ist vorgesehen, daß sowohl der bei einem Dosiervorgang erzeugte Volumenstrom als auch der zugeordnete Druck ständig gemessen und gespeichert werden. Damit der Dosierdruck vor jedem Dosiervorgang bekannt ist, müssen die entsprechenden Parameter für die jeweilige Komponente gespeichert werden.

Gemäß einem weiteren Vorschlag der Erfindung ist vorgesehen, daß die während des Dosiervorgangs jeweils vorhandene Temperatur T ständig gemessen und gespeichert wird und daß die temperaturabhängige Kompressibilität

$$\chi = -\frac{1}{V} \bullet \left( \frac{\delta V}{\delta p} \right)_T$$

der Komponente bei jedem Dosierzyklus gemessen, gespeichert und mit einem entsprechenden gespeicherten druck- und temperaturabhängigen Referenzwert verglichen wird.

Gemäß einem weiteren Vorschlag der Erfindung ist vorgesehen, daß der Volumenstrom kontinuierlich und pulsationsfrei erzeugt wird, indem die Komponente in zwei Teilströme aufgeteilt wird, wobei während des Ansaugens und Vorkomprimierens des einen Teilstromes der andere Teilstrom unter Druck dosiert wird, wobei die zeitliche Dauer des Dosiervorganges größer oder gleich der zeitlichen Dauer von Saug- und Vorkompressionsvorgang ist.

Eine reproduzierbare hochgenaue kontinuierliche Dosierung setzt ein pulsationsfreies Fördern voraus. Zu diesem Zwecke wird der Komponentenstrom in zwei Teilströme aufgeteilt und zwar derart, daß abwechselnd die eine Dosierpumpe und danach die andere baugleiche Dosierpumpe angetrieben wird. Bei diesem Verfahren sind Pulsationen weitgehend eliminiert, weil vor jedem Dosiervorgang grundsätzlich eine Vorkompression der Komponente stattfindet, indem kurz vor Beendigung des Dosiervorgangs der einen Dosierpumpe bereits die andere Pumpe zu dosieren beginnt.. Dabei wird der Vorkompressionsdruck bis auf das Druckniveau des Dosierdrucks angehoben, um eventuelle Drucksprünge beim Umschalten von einer Pumpe zur anderen zu vermeiden. Im Idealfall wird auf diese Art und Weise eine theoretisch vollkommene Pulsationsfreiheit erreicht. Praktisch kann mit dieser Methode eine Pulsationsfreiheit <0,01%, bezogen auf den Momentanwert, erreicht werden.

Ein weiterer Vorteil dieses Verfahrens ist, daß der Saughub der Pumpen grundsätzlich in einem kürzeren Zeitintervall erfolgen kann als der Dosierhub. Dadurch wird die notwendige Zeit gewonnen, um die oben erwähnten Messungen der Kompressibilität in regelmäßigen Intervallen, z.B. während der Ruhezeiten der jeweiligen Dosierpumpe, durchzuführen.

Gemäß einem weiteren Vorschlag der Erfindung ist vorgesehen, daß während der Ruhezeiten eines Teilstroms bzw. der Komponente, in denen weder angesaugt noch dosiert wird, eine Dichtigkeitsprüfung sämtlicher ruhender leckage- bzw. verschleißgefährdeter Anlagenteile durchgeführt wird, wobei die Komponente auf ihrer Druckseite leckagefrei abgesperrt, mit einem definierten Druck beaufschlagt und danach ein möglicher Abfall des Druckes innerhalb eines definierten Zeitintervalls gemessen wird.

Diese Meßmethode macht eine spezifischere Überprüfung sämtlicher leckage- bzw. verschleißgefährdeter Anlagenteile als mit der Messung der Kompressibilität möglich. Erfolgt z.B. nach der Messung der Kompressibilität eine Fehlermeldung, so kann sowohl die im Pumpenraum eingeschlossene Masse von ihrem Sollwert abweichen als auch eine Undichtigkeit der Dosiervorrichtung vorliegen. Um den Fehler besser lokalisieren zu können, wird eine Dichtigkeitsprüfung nach dem oben genannten Vorschlag der Erfindung durchgeführt. Zu diesem Zweck wird die Komponente auf ihrer Druckseite leckagefrei abgesperrt, dann wird die Komponente auf den Dosierdruck vorkomprimiert, die Dosierpumpe abgeschaltet und danach ein möglicher Druckabfall innerhalb eines definierten Zeitintervalls gemessen. Wenn sich der einstellende Druckabfall über die vorgegebenen Fehlergrenzen hinausbewegt, wird eine Fehlermeldung ausgegeben ("Anlage undicht") und der Dosiervorgang nicht eingeleitet. Außerdem kann mit dieser Meßmethode die Dichtigkeit bzw. Undichtigkeit der Dosiervorrichtung quantitativ erfaßt werden. Anstelle einer Fehlermeldung erfolgt dann z.B. der Hinweis "Anlage 99% dicht".

Gemäß einem weiteren Vorschlag der Erfindung wird ein Verfahren zur Dichtigkeitsprüfung eines die Komponente ansaugenden und dosierenden Verdrängers vorgeschlagen, gemäß dem in den Ruhezeiten, in denen weder angesaugt noch dosiert wird, die Komponente auf ihrer Druckseite druckentlastet, der Verdränger mit einem definierten Druck beaufschlagt und danach ein möglicher Abfall des Druckes innerhalb eines definierten Zeitintervalls gemessen wird.

Diese Dichtigkeitsprüfung beschränkt sich auf eine Überprüfung des die Komponente ansaugenden und dosierenden Verdrängers. Durch die Messung der Kompressibilität kann eine Undichtigkeit des Verdrängers nicht immer festgestellt werden, da die Differenzdrücke bei vielen Verdrängem, insbesondere bei flexiblen Verdrängern, sehr gering sind. Um eventuelle Fehler dennoch lokalisieren zu können, wird eine Dichtigkeitsprüfung nach dem oben genannten Vorschlag der Erfindung durchgeführt. Zu diesem Zweck wird die Komponente auf ihrer Druckseite druckentlastet, dann wird die Komponente auf einen definierten Druck vorkomprimiert, die Dosierpumpe abgeschaltet und danach ein möglicher Druckabfall innerhalb eines definierten Zeitintervalls gemessen. Wenn sich der einstellende Druckabfall über die vorgegebenen Fehlergrenzen hinausbewegt, wird eine Fehlermeldung ausgegeben "Verdränger undicht" und der Dosiervorgang nicht eingeleitet. Außerdem kann mit dieser Meßmethode die Dichtigkeit bzw. Undichtigkeit des Verdrängers quantitativ erfaßt werden. Anstelle einer Fehlermeldung erfolgt dann z.B. der Hinweis "Verdränger 99% dicht".

Gemäß einem weiteren Vorschlag der Erfindung ist vorgesehen, daß mindestens ein Verdränger, der von jeweils einer hydraulischen Verdrängerpumpe abwechselnd mittels Hydraulikflüssigkeit angesaugt und gedrückt wird, den Volumenstrom der Komponente erzeugt

Nach dem oben genannten Vorschlag der Erfindung wird zunächst unproblematisch mit einer translatorisch oder rotatorisch arbeitenden hydraulischen Verdrängerpumpe Hydraulikflüssigkeit dosiert, was ohne Schwierigkeiten erfolgen kann. Die Dosierung der problematischen Flüssigkeit, der Komponente, dagegen erfolgt in einem zweiten Raum, der durch einen oszillierenden Verdränger von dem ersten mit Hydraulikflüssigkeit gefüllten Raum getrennt ist. Ein auf der Hydraulikseite verdrängtes Volumen verdrängt somit auf der Komponentenseite ein gleich großes Volumen der zu dosierenden Komponente. Die Verdränger sind dabei zwischen Hydraulikflüssigkeit und Komponente hydraulisch eingespannt, so daß sich auf beiden Seiten bei reibungsfreier Führung der Verdränger ein nahezu gleiches Druckniveau einstellt. Die Reibungsfreiheit ist vorteilhaft, um einen Druckaufbau durch eventuelle Anfahrmomente der Verdränger zu vermeiden. Auf diese Art und Weise ist eine verschleißarme, hochgenaue Dosierung über lange Zeit möglich.

Gemäß einem weiteren Vorschlag der Erfindung ist vorgesehen, daß der Verdränger von der Verdrängerpumpe mit einem konstant gehaltenen Druck beaufschlagt und eine mögliche Leckage mit einer Volumenstrommeßeinrichtung zwischen Verdrängerpumpe und Verdränger gemessen wird.

Diese Art der Dichtigkeitsprüfung sämtlicher verschleiß- und leckagegefährdeter Anlagenteile einschließlich des Verdrängers ist notwendig bei rotatorischen Verdrängerpumpen, die über eine elektrische oder elektrohydraulische Hubverstellung verfügen. Solche Pumpen können elektronisch vorwählbar einen konstanten Druck fahren. Wird nun der Verdränger von der Verdrängerpumpe mit einem konstant gehaltenen Druck beaufschlagt, so können mögliche Leckagen des Verdrängers bei Druckentlastung der Komponente bzw. mögliche Leckagen der übrigen Anlagenteile durch leckagefreie Absperrung der Komponente mittels einer Volumenstrommeßeinrichtung zwischen Verdrängerpumpe und Verdränger gemessen werden. Eine Dichtigkeitsprüfung durch Messung eines möglichen Druckabfalls ist bei solchen "druckgeregelten" Verdrängerpumpen grundsätzlich nicht möglich.

Gemäß einem-weiteren Vorschlag der Erfindung ist vorgesehen, daß alle Verfahrensschritte mit einer speicherprogrammierbaren Mikroprozessorsteuerung durchgeführt werden.

Eine speicherprogrammierbare Mikroprozessorsteuerung bringt den Vorteil einer großen Flexibilität mit sich. Prozeßabläufe lassen sich damit optimal auf die gestellten individuellen Anforderungen abstimmen. Durch die zusätzliche Möglichkeit der Fehlererkennung und Diagnose können Fehlbedienungen rechtzeitig abgefangen und die Wartungszeit drastisch verkürzt werden. Aufgrund der sinkenden Preise für Personal Computer ist ein wirtschaftlicher Einsatz anstelle einer SPS schon bei weniger aufwendigen Prozessen sinnvoll, insbesondere dann, wenn die Prozeßabläufe visualisiert und dokumentiert werden sollen. Das Wartungspersonal wird dadurch in die Lage versetzt, alle maschinenrelevanten Daten am Bildschirm bzw. am Drucker zu verfolgen. Ferner ist eine Schnittstelle zu einem übergeordneten Leitrechner für die zentrale Meßdatenerfassung möglich.

Zur Durchführung des erfindungsgemäßen Verfahrens sieht die. Erfindung eine Vorrichtung vor, die sich dadurch auszeichnet,

daß sie mindestens einen in einem Gehäuse untergebrachten Verdränger aufweist,

daß jedes solches Gehäuse in einen Hydraulikraum und einen Komponentenraum unterteilt ist, wobei der Verdränger den Hydraulikraum und den Komponentenraum dichtend voneinander trennt,

daß an den Hydraulikraum entweder direkt oder über eine Hydraulikleitung jeweils eine Verdrängerpumpe angeschlossen ist,

daß im Ein- und Ausgang des jeweiligen Komponentenraumes jedes Verdrängers jeweils eine leckagedichte Absperrvorrichtung angeordnet ist,

daß am Hydraulikraum jedes Verdrängers jeweils eine Druckmeßeinrichtung angeschlossen ist,

daß jede Verdrängerpumpe jeweils eine Weg- oder Volumenstrommeßeinrichtung aufweist, die es erlaubt, die bei der Vorkompression auftretende Volumenänderung $\delta V$ der zu dosierenden Komponente zu bestimmen und

daß jede Verdrängerpumpe mit einer die Saug- und Druckhübe zeitlich koordinierenden Steuerung versehen ist und diese Steuerung mit der Druckmeßeinrichtung und der Weg- oder Volumenstrommeßeinrichtung verbunden ist und aus den bei der Vorkompression auftretenden Druck- und Volumenänderungen $\delta p, \delta V$ die Kompressibilität der Komponente berechnet.

Eine besonders einfache Ausführung stellt die diskontinuierlich arbeitende Dosiervorrichtung dar, die nur aus jeweils einem zwischen Komponenten- und Hydraulikraum oszillierenden Verdränger, einem Gehäuse und einer Verdrängerpumpe besteht. Der Verdränger ist dabei dichtend zwischen Hydraulikflüssigkeit und Komponente hydraulisch eingesparint, so daß sich auf beiden Seiten bei reibungsfreier Führung des Verdrängers ein nahezu gleiches Druckniveau einstellt. Eine reibungsfreie Führung des Verdrängers ist vorteilhaft, weil sie keinen Druckaufbau durch Anfahrmomente erzeugt. Die reibungsfreie Führung kann besonders einfach durch flexible Verdränger erreicht werden. Die Druckbeaufschlagung des Verdrängers erfolgt durch eine hydraulische Verdrängerpumpe, die entweder translatorisch mit einer Wegmeßeinrichtung oder rotatorisch mit einer Volumenstrommeßeinrichtung zusammenarbeitet. Mit der Weg- bzw. Volumenstrommeßeinrichtung können sowohl die im Verfahren beschriebenen Verfahrensschritte als auch die Position des Verdrängers, durch volumetrische Weg- bzw. Volumenstrommessung ermittelt werden. Grundsätzlich kann deshalb auf Lage-Sensoren verzichtet werden, weil die dosierte Hydraulikflüssigkeit als Maß für den zurückgelegten Weg des Verdrängers herangezogen wird. Nachteilig ist hierbei, daß nach Unterbrechungen und anderen Störungen die Position des Verdrängers nicht ermittelt werden kann. Darum sollte grundsätzlich zumindest ein Lage-Sensor eine Hubendlage signalisieren. Die Ventile im Ein- und Ausgang des jeweiligen Komponentenraumes sind verschleißarme, leckagedichte Sitzventile, die in den Ruhezeiten der Verdrängerpumpe den im Verfahren beschriebenen Dichtigkeitsprüfungen unterzogen werden. Die am Hydraulikraum angeschlossene Druckmeßeinrichtung besteht aus einem elektrischen Drucksensor, mit dem die nach dem Verfahren vorgesehenen Verfahrensschritte durchgeführt werden können. Die Saug- und Druckhübe werden im Falle der translatorischen Verdrängerpumpe durch einen elektrisch geregelten bzw. gesteuerten Antrieb mit integriertem Wegmeßsystem und im Falle der rotatorischen Verdrängerpumpe durch eine hydraulische Verstellpumpe mit nachgeschalteter Volumenstrommeßeinrichtung bewerkstelligt.

Im folgenden Teil der Beschreibung werden einige Ausführungsbeispiele der erfindungsgemäßen Vorrichtung anhand von Zeichnungen dargestellt und im folgenden näher beschrieben. Es zeigen:

Fig. 1:    eine schematische Darstellung eines Ausführrungbeispiels einer diskontinuierlichen Membran-Dosiervorrichtung mit elektrischem Spindelantrieb für eine Komponente,

Fig. 2:    eine schematische Darstellung eihes Ausführungbeispiels mit zwei diskontinuierlichen Membran-Dosiervorrichtungen mit elektrischem Spindelantrieb für zwei Komponenten,

Fig. 3:    eine schematische Darstellung eines Ausführungbeispiels einer kontinuierlichen Membran-Dosiervorrichtung mit elektrischem Spindelantrieb für eine Komponente und

Fig. 4:    eine schematische Darstellung eines Ausführrungbeispiels einer diskontinuierlichen Membran-Dosiervorrichtung mit hydraulischem Verstellpumpenantrieb für eine Komponente.

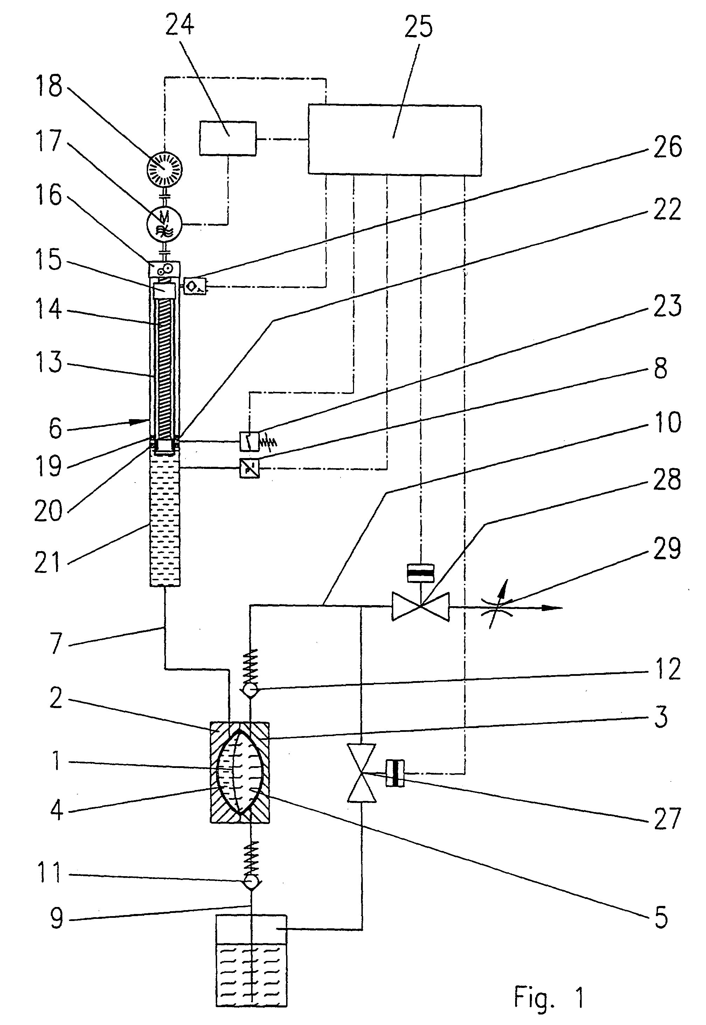

Fig. 1 zeigt eine schematische Darstellung eines Ausführungbeispiels einer diskontinuierlichen Membran-Dosiervorrichtung mit elektrischem Spindelantrieb für eine Komponente. Die Vorrichtung weist.eine Membran 1 auf, die zwischen zwei Gehäusehälften 2,3 eingespannt ist, wobei die Membran 1 einen Hydraulikraum 4 von einem Komponentenraum 5 dichtend trennt. An dem Hydraulikraum 4 ist eine Verdrängerpumpe 6 über eine Hydraulikleitung 7 sowie eine Druckmeßeinrichtung 8 angeschlossen. Am Eingang 9 und am Ausgang 10 des Komponentenraumes 5 befindet sich jeweils ein selbsttätiges Rückschlagventil 11,12. Die Verdrängerpumpe 6 besteht aus einem Plungerkolben 13, der über eine Spindel 14 mit Spindelmutter 15 translatorisch angetrieben wird. Die Spindel 14 wiederum wird über ein Untersetzungsgetriebe 16 von einem Schritt- bzw. Servomotor 17 angetrieben: Der Schritt- bzw. Servomotor 17 ist mit einem Inkremental-Drehgeber 18 gekoppelt, der zur Wegmessung des Plungerkolbens 13 dient. Der Plungerkolben 13 wird mit einer doppelten Stangendichtung 19,20 im Gehäuse 21 abgedichtet, wobei der Leckageraum 22 mit einem Druckschalter 23 verbunden ist. Zur Steuerung des Schritt- bzw. Servomotors 17 dient eine Motorsteuerung 24, die mit einer übergeordneten speicherprogrammierbaren Mikroprozessorsteuerung 25 kommuniziert. Ein Lage-Sensor 26 meldet die Hubendlage nach dem Saugvorgang des Plungerkolbens 13. Um eine Dichtigkeitsprüfung der Membran 1 vornehmen zu können, wird der Ausgang 10 des Koponentenraumes 5 durch ein Ventil 27 druckentlastet. Um eine Vorkompression sowie eine Dichtigkeitsprüfung für alle anderen verschleiß- und leckagegefährdeten Bauteile nach dem erfindungsgemäßen Verfahren durchführen zu können, ist ein Ventil 28 vorgesehen, das den Ausgang 10 des Komponentenraumes 5 leckagedicht absperren kann. Die Drossel 29 stellt ein Ersatzschaltbild für das am Ausgang 10 des Komponentenraumes 5 angeschlossene Leitungssystem (Rohre und/oder Schläuche) dar.

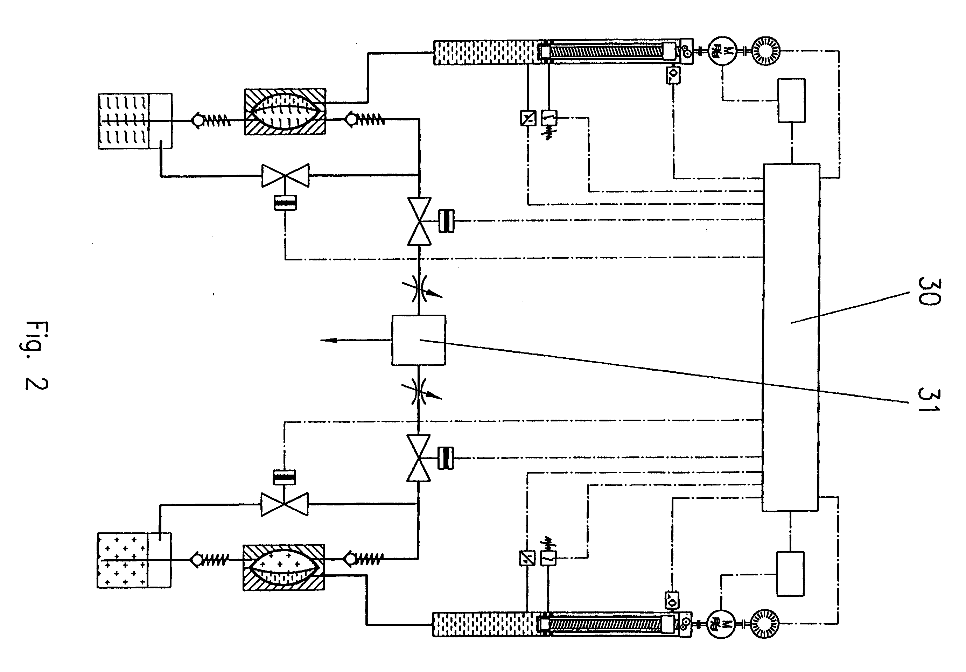

Fig. 2 zeigt eine schematische Darstellung eines Ausführungbeispiels mit zwei diskontinuierlichen Membran-Dosiervorrichtungen mit elektrischem Spindelantrieb für zwei Komponenten. In diesem Ausführungbeispiel werden zwei Vorrichtungen nach der Erfindung über eine koordinierende Steuerung 30 zur Bildung eines Komponentengemisches (ohne Abb.) miteinander gekoppelt Die Bildung des Komponentengemisches erfofgt in der.Mischkammer 31.

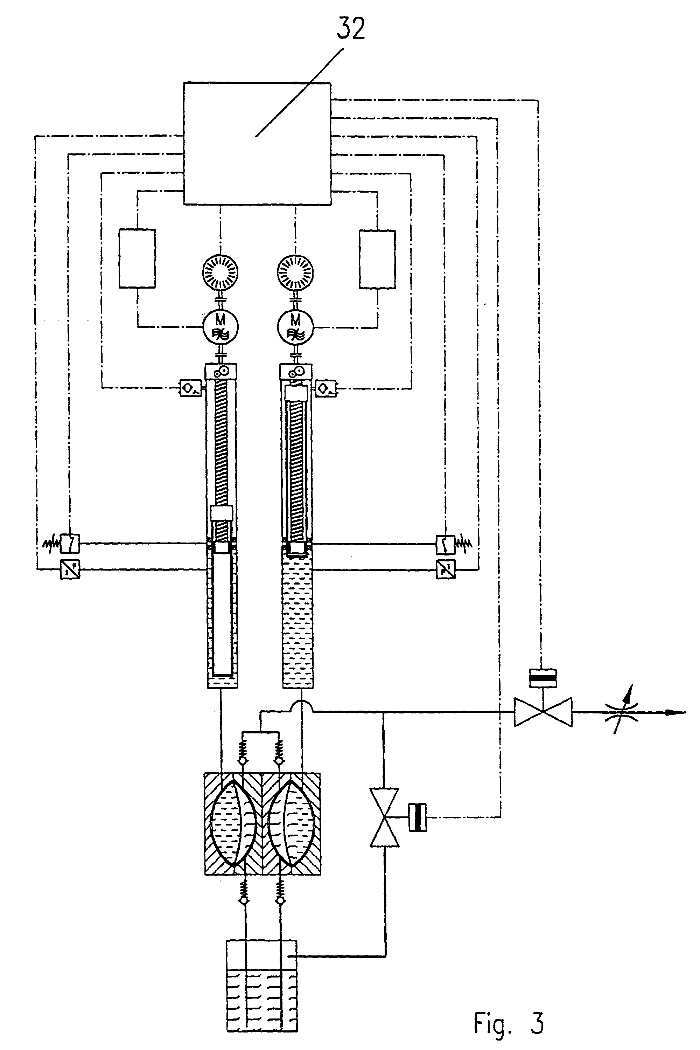

Fig.3 zeigt eine schematische Darstellung eines Ausführungbeispiels einer kontinuierlichen Membran-Dosiervorrichtung mit elektrischem Spindelantrieb für eine Komponente. In diesem Ausführungbeispiel werden zwei Vorrichtungen nach der Erfindung über eine koordinierende Steuerung 32 zur Bildung eines pulsationsfreien Volumenstromes einer Komponente aus zwei Teilsirömen miteinander gekoppelt.

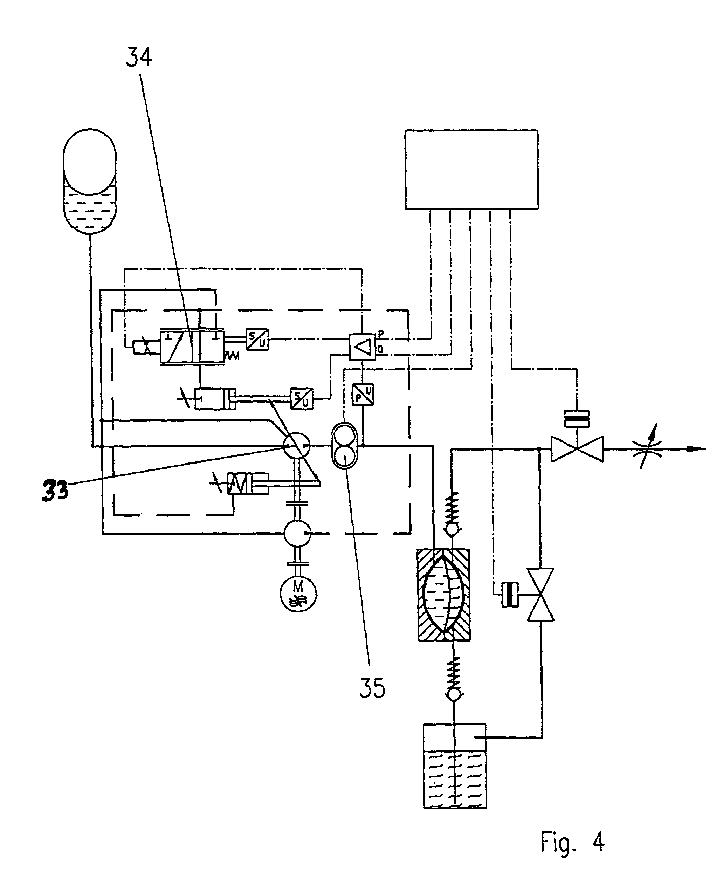

Fig. 4 zeigt eine schematische Darstellung eines Ausführungbeispiels einer diskontinuierlichen Membran-Dosiervorrichtung mit hydraulischem Verstellpumpenantrieb für eine Komponente. Im Unterschied zu allen vorhergehenden Ausführungsbeispielen besteht hier die Verdrängerpumpe aus einer hydraulischen Verstellpumpe 33 mit einer elektrohydraulischen Hubverstellung mittels Proportional- bzw. Servoventil 34. Die für das Verfahren bzw. die einzelnen Verfahrensschritte erforderlichen Volumenstrommessungen werden mit der Volumenstrommeßeinrichtung 35 durchgeführt.

**Patentansprüche**

1.   Verfahren zur verschleiß- und leckagekontrollierten volumetrischen Dosierung einer fließfähigen Komponente, wobei

- die Komponente angesaugt, anschließend vorkomprimiert und dann unter Druck dosiert wird,
- die Komponente am Ende der Vorkompression auf einem bestimmten Druck gehalten wird,
- die bei der Vorkompression bewirkte Volumenänderung δV sowie die Druckänderung δp und damit die stoffspezifische Kompressibilität $\chi = -\frac{1}{V} \cdot \frac{\delta V}{\delta p}$ der Komponente vor jedem Dosiervorgang gemessen, gespeichert und mit einem entsprechenden gespeicherten Referenzwert verglichen wird.

2. Verfahren nach Anspruch 1, **dadurch gekennzeichnet, daß** der Druck am Ende der Vorkompression immer nahezu gleich dem bei einem vorhergegangenen und/oder bei einem gleichzeitig ablaufenden Dosiervorgang "erlernten" Dosierdruck gehalten wird.

3. Verfahren nach Anspruch 1 und 2, **dadurch gekennzeichnet, daß** sowohl der bei einem Dosiervorgang erzeugte Volumenstrom als auch der zugeordnete Druck ständig gemessen und gespeichert werden.

4. Verfahren nach einem der vorhergehenden Ansprüche, **dadurch gekennzeichnet, daß** die während des Dosiervorgangs jeweils vorhandene Temperatur T ständig gemessen und gespeichert wird und daß die temperaturabhängige Kompressibilität

$$\chi = -\frac{1}{V} \bullet \left( \frac{\delta V}{\delta p} \right)_T$$

der Komponente bei jedem Dosierzyklus gemessen, gespeichert und mit einem entsprechenden gespeicherten druck- und temperaturabhängigen Referenzwert verglichen wird.,

5. Verfahren nach einem der vorhergehenden Ansprüche, **dadurch gekennzeichnet, daß** der Volumenstrom kontinuierlich und pulsationsfrei erzeugt wird, indem die Komponente in zwei Teilströme aufgeteilt wird, wobei während des Ansaugens und Vorkomprimierens des einen Teilstromes der andere Teilstrom unter Druck dosiert wird und wobei die zeitliche Dauer des Dosiervorganges größer oder gleich der zeitlichen Dauer von Saug- und Vorkompressionsvorgang ist.

6. Verfahren nach einem der vorhergehenden Ansprüche, **dadurch gekennzeichnet, daß** mindestens ein Verdränger, der von jeweils einer hydraulischen Verdrängerpumpe abwechselnd mittels Hydraulikflüssigkeit angesaugt und gedrückt wird, den Volumenstrom der Komponente erzeugt.

7. Verfahren nach einem der. vorhergehenden Ansprüche, **dadurch gekennzeichnet, daß** während der Ruhezeiten.eines Teilstroms bzw. der Komponente, in denen weder angesaugt noch dosiert wird, eine Dichtigkeitsprüfung sämtlicher ruhender lekkage- bzw. verschleißgefährdeter Anlagenteile durchgeführt wird, indem die jeweilige Komponente auf ihrer Druckseite leckagefrei abgesperrt, mit einem definierten Druck beaufschlagt und danach ein möglicher Abfall des Druckes innerhalb eines definierten Zeitintervalls gemessen wird.

8. Verfahren nach einem der vorhergehenden Ansprüche, **dadurch gekennzeichnet, daß** in den Ruhezeiten, in denen weder angesaugt noch dosiert wird, die Komponente auf ihrer Druckseite druckentlastet, der Verdränger mit einem definierten Druck beaufschlagt und danach ein möglicher Abfall des Druckes innerhalb eines definierten Zeitintervalls gemessen wird.

9. Verfahren nach einem der Ansprüche 1 bis 6, **dadurch gekennzeichnet, daß** der Verdränger von der Verdrängerpumpe mit einem konstant gehaltenen Druck beaufschlagt und eine mögliche Leckage mit einer Volumenstrommeßeinrichtung zwischen Verdrängerpumpe und Verdränger gemessen wird.

10. Verfahren nach einem der vorhergehenden Ansprüche, **dadurch gekennzeichnet, daß** alle Verfahrensschritte mit einer speicherprogrammierbaren Mikroprozessorsteuerung durchgeführt werden.

11. Vorrichtung zur Durchführung des Verfahrens nach den vorhergehenden Ansprüchen, wobei

- .mindestens ein in einem Gehäuse (2,3) untergebrachter Verdränger (1) vorgesehen ist,
- jedes solches Gehäuse (2,3) in einen Hydraulikraum (4) und einen Komponentenraum (5) unterteilt ist, wobei der Verdränger (1) den Hydraulikraum (4) und den Komponentenraum (5) dichtend voneinander trennt,
- an den Hydraulikraum (4) entweder direkt oder über eine Hydraulikleitung (7) jeweils eine Verdrängerpumpe (6) angeschlossen ist,
- im Ein- und Ausgang (9,10) des jeweiligen Komponentenraumes (5) jedes Verdrängers (1) jeweils eine leckagedichte Absperrvorrichtung (11,12) angeordnet ist,
- am Hydraulikraum (4) jedes Verdrängers (1) jeweils eine Druckmeßeinrichtung (8) angeschlossen ist,
- jede Verdrängerpumpe (6) jeweils eine Weg- oder Volumenstrommeßeinrichtung (18;35) aufweist, die es erlaubt, die bei der Vorkompression auftretende Völumenänderung δV der zu dosierenden Komponente zu bestimmen,

- jede Verdrängerpumpe (6) mit einer die Saug- und Druckhübe zeitlich koordinierenden Steuerung (25) versehen ist und diese Steuerung (25) mit der Druckmeßeinrichtung (8) und der Weg- oder Volumenstrommeßeinrichtung (18; 35) verbunden ist und aus den bei der Vorkompression auftretenden Druck- und Volumenänderungen (δp,δV) die Kompressibilität der Komponente berechnet.

**Claims**

1. Method for the wear- and leakage-controlled volumetric metering of a flowable component, in which

   - the component is sucked in, subsequently precompressed and then metered under pressure,
   - the component is maintained at a specific pressure at the end of precompression,
   - the volume change δV brought about during precompression and the pressure change δp and consequently the material-specific compressibility $\chi = -\frac{1}{V}\cdot\frac{\delta V}{\delta p}$ of the component are measured before each metering operation, stored and compared with a corresponding stored reference value.

2. Method according to Claim 1, **characterized in that**, at the end of precompression, the pressure is always maintained virtually equal to the metering pressure "learned" during a preceding and/or simultaneous metering operation.

3. Method according to Claims 1 and 2, **characterized in that** both the volume flow generated during a metering operation and the associated pressure are constantly measured and stored.

4. Method according to one of the preceding claims, **characterized in that** the temperature T present in each case during the metering operation is constantly measured and stored, and **in that**, during each metering cycle, the temperature-dependent compressibility

$$\chi = -\frac{1}{V}\bullet\left(\frac{\delta V}{\delta p}\right)_T$$

of the component is measured, stored and compared with the corresponding stored pressure- and temperature-dependent reference value.

5. Method according to one of the preceding claims, **characterized in that** the volume flow is generated continuously and in a pulsation-free manner **in that** the component is divided into two part-streams, while one part-stream is sucked in and precompressed, the other part-stream being metered under pressure, and the time duration of the metering operation being greater than or equal to the time duration of the suction and precompression operation.

6. Method according to one of the preceding claims, **characterized in that** at least one displacer, which is alternately sucked in and delivered by means of a hydraulic fluid, in each case by a hydraulic displacement pump, generates the volume flow of the component.

7. Method according to one of the preceding claims, **characterized in that**, during the rest times of a part-stream or of the component in which it is neither sucked in nor metered, a leak test of all the stationary plant parts where there is a risk of leakage or wear is carried out, **in that** the respective component is shut off in a leakage-free manner on its delivery side and subjected to a defined pressure and, thereafter, a possible drop in the pressure is measured within a defined time interval.

8. Method according to one of the preceding claims, **characterized in that**, in the rest times in which it is neither sucked in nor metered, the component is relieved of pressure on its delivery side, the displacer is subjected to a defined pressure and, thereafter, a possible drop in the pressure is measured within a defined time interval.

9. Method according to one of Claims 1 to 6, **characterized in that** the displacer is subjected to a constantly maintained pressure by the displacement pump and a possible leakage is measured by means of a volume-flow measuring device between the displacement pump and the displacer.

10. Method according to one of the preceding claims, **characterized in that** all the method steps are carried out with a stored-program microprocessor control.

11. Apparatus for carrying out the method according to the preceding claims, in which

    - at least one displacer (1) accommodated in a housing (2, 3) is provided,
    - each such housing (2, 3) is subdivided into a hydraulic space (4) and a component space (5), the displacer (1) separating the hydraulic space (4) and the component space (5) sealingly from one another,
    - a displacement pump (6) is connected to the hydraulic space (4) in each case either directly or via a hydraulic line (7),

- a leak-tight shut-off device (11, 12) is arranged in each case in the inlet and outlet (9, 10) of the respective component space (5) of each displacer (1),
- a pressure-measuring device (8) is connected in each case to the hydraulic space (4) of each displacer (1),
- each displacement pump (6) has in each case a displacement-measuring or volume-flow measuring device (18; 35) which makes it possible to determine the volume change δV, occurring during precompression, of the component to be metered,
- each displacement pump (6) is provided with a control (25) coordinating the suction and delivery strokes in time, and this control (25) is connected to the pressure-measuring device (8) and the displacement-measuring and volume-flow measuring device (18; 35), and calculates the compressibility of the component from the pressure and volume changes (δp, δV) occurring during precompression.

## Revendications

1. Procédé pour le dosage volumétrique d'un composant coulant, avec contrôle des fuites et de l'usure, dans lequel

   - le composant est aspiré, puis précomprimé et ensuite dosé sous pression,
   - à la fin de la précompression, le composant est maintenu à une pression déterminée,
   - la variation de volume δV provoquée par la précompression ainsi que la variation de pression δp, et de ce fait la compressibilité spécifique de la matière du composant

   $$\chi = -\frac{1}{V} \bullet \frac{\delta V}{\delta p}$$

   est, avant chaque opération de dosage, mesurée, mémorisée et comparée avec une valeur de référence correspondante enregistrée dans la mémoire.

2. Procédé suivant la revendication 1, **caractérisé en ce que** la pression à la fin de la précompression est toujours maintenue pratiquement égale à la pression de dosage "enseignée" par une opération de dosage effectuée précédemment et/ou simultanément.

3. Procédé suivant la revendication 1 ou 2, **caractérisé en ce qu'**aussi bien le débit volumique produit lors d'une opération de dosage que la pression associée sont mesurés et mémorisés en permanence.

4. Procédé suivant l'une quelconque des revendications précédentes, **caractérisé en ce que** la température T respectivement présente pendant l'opération de dosage est mesurée et mémorisée en permanence et **en ce que** la compressibilité du composant, qui dépend de la température,

   $$\chi = -\frac{1}{V} \bullet \left(\frac{\delta V}{\delta p}\right)_T$$

   est, à chaque cycle de dosage, mesurée, mémorisée et comparée avec une valeur de référence correspondante enregistrée dans la mémoire, qui dépend aussi de la pression et de la température.

5. Procédé suivant l'une quelconque des revendications précédentes, **caractérisé en ce que** le débit volumique est produit de façon continue et sans pulsations, en divisant le composant en deux courants partiels, dans lequel, pendant l'aspiration et la précompression d'un premier courant partiel, l'autre courant partiel est dosé sous pression et dans lequel la durée temporelle de l'opération de dosage est supérieure ou égale à la durée temporelle de l'opération d'aspiration et de précompression.

6. Procédé suivant l'une quelconque des revendications précédentes, **caractérisé en ce qu'**au moins un dispositif volumétrique, qui est alternativement aspiré et refoulé au moyen d'un liquide hydraulique chaque fois par une pompe volumétrique, produit le débit volumique du composant.

7. Procédé suivant l'une quelconque des revendications précédentes, **caractérisé en ce que**, pendant les périodes de repos d'un courant partiel, respectivement du composant, au cours desquelles il n'y a ni aspiration ni dosage, on procède à un contrôle d'étanchéité de l'ensemble des parties arrêtées de l'installation, exposées à des fuites ou à de l'usure, en bloquant le composant respectif sans fuite du côté du refoulement, en le soumettant à une pression définie et en mesurant ensuite une éventuelle diminution de la pression en un laps de temps défini.

8. Procédé suivant l'une quelconque des revendications précédentes, **caractérisé en ce que**, pendant les périodes de repos au cours desquelles il n'y a ni aspiration ni dosage, on supprime la pression du composant sur son côté de refoulement, on soumet le dispositif volumétrique à une pression définie et ensuite on mesure une éventuelle diminution de la pression en un laps de temps défini.

**9.** Procédé suivant l'une quelconque des revendications 1 à 6, **caractérisé en ce que** le dispositif volumétrique est soumis par la pompe volumétrique à une pression maintenue constante et on mesure une fuite éventuelle avec un dispositif de mesure de débit volumique entre la pompe volumétrique et le dispositif volumétrique.

**10.** Procédé suivant l'une quelconque des revendications précédentes, **caractérisé en ce que** toutes les opérations du procédé sont effectuées avec une commande par microprocesseur à mémoire programmable.

**11.** Dispositif pour la mise en oeuvre du procédé suivant les revendications précédentes, dans lequel

- il est prévu au moins un dispositif volumétrique (1) installé dans une enceinte (2, 3),
- chaque enceinte de ce type (2, 3) est divisée en une chambre hydraulique (4) et une chambre de composant (5), le dispositif volumétrique (1) séparant la chambre hydraulique (4) et la chambre de composant (5) l'une de l'autre de façon étanche,
- une pompe volumétrique (6) est chaque fois raccordée à la chambre hydraulique (4) soit directement soit via une conduite hydraulique (7),
- un dispositif de blocage (11, 12) étanche aux fuites est chaque fois disposé dans l'entrée et dans la sortie (9, 10) de la chambre de composant respective (5) de chaque dispositif volumétrique (1),
- un dispositif de mesure de la pression (8) est chaque fois raccordé à la chambre hydraulique (4) de chaque dispositif volumétrique (1),
- chaque pompe volumétrique (6) présente chaque fois un dispositif de mesure de la course ou du débit volumique (18; 35), qui permet de déterminer la variation de volume $\delta V$ du composant à doser, qui se produit lors de la précompression,
- chaque pompe volumétrique (6) est pourvue d'une commande (25) qui coordonne dans le temps les courses d'aspiration et de refoulement, et cette commande (25) est raccordée au dispositif de mesure de la pression (8) et au dispositif de mesure de la course ou du débit volumique (18; 35) et calcule la compressibilité du composant à partir des variations de pression et de volume ($\delta p$, $\delta V$) qui se produisent lors de la précompression.

Fig. 1

Fig. 2

32

Fig. 3

Fig. 4